Europäisches Patentamt

European Patent Office

Office européen des brevets

(11) Veröffentlichungsnummer: **0 215 320 B1**

(12) **EUROPÄISCHE PATENTSCHRIFT**

(45) Veröffentlichungstag der Patentschrift: **29.01.92**

(21) Anmeldenummer: **86111510.3**

(22) Anmeldetag: **20.08.86**

(51) Int. Cl.⁵: **B60P 3/32**

(54) **Wohnwagenanhänger.**

(30) Priorität: **20.09.85 DE 8526938 U**

(43) Veröffentlichungstag der Anmeldung:
**25.03.87 Patentblatt 87/13**

(45) Bekanntmachung des Hinweises auf die
Patenterteilung:
**29.01.92 Patentblatt 92/05**

(84) Benannte Vertragsstaaten:
**AT BE CH DE FR GB IT LI NL SE**

(56) Entgegenhaltungen:
**DE-A- 1 580 215      DE-A- 2 443 606
DE-U- 7 607 273      FR-A- 1 364 932
GB-A- 398 001        US-A- 2 153 058**

(73) Patentinhaber: **Pittinger, Hellmut
Seestrasse 7 A
W-8130 Starnberg-Percha(DE)**

(72) Erfinder: **Pittinger, Hellmut
Seestrasse 7 A
W-8130 Starnberg-Percha(DE)**

(74) Vertreter: **Klunker . Schmitt-Nilson . Hirsch
Winzererstrasse 106
W-8000 München 40(DE)**

## Beschreibung

Die Erfindung bezieht sich auf einen Wohnwagenanhänger, dessen in Fahrtrichtung vorderer Endbereich als sich als in der Breite nach vorn verjüngender, im wesentlichen die gesamte Höhe des Wohnwagens einnehmender Bug ausgebildet ist, wobei in mindestens einer der Bugseitenwände eine mannshohe Eigangstür vorgesehen ist und der Buginnenraum und der Innenraum des restlichen Wohnwagens miteinander in Verbindung stehen.

Bei Wohnwagenanhängern ist es bekannt (DE-U- 82 05 623), den Raum zwischen dem Zugfahrzeug und der Vorderwand des Anhängers, also den Raum über der Deichsel,für die Unterbringung der Gasflaschen oder einen Deichselstaukasten auszunutzen. Dabei wurde jeweils nur ein Bruchteil der Bauhöhe des Wohnwagens über der Deichsel ausgenutzt. Nachteilig war dabei aber vor allem die Tatsache, daß eine Zugänglichkeit des Deichselstaukastens nur von außen gegeben war.

Es ist deshalb auch schon vorgeschlagen worden (DE-A-31 04 550), die Vorderwand des Wohnwagens nicht mehr vertikal, sondern unter einem Winkel von etwa 45° nach vorneunten geneigt auszubilden. Dies ergibt einen sich in der Höhe verjüngenden Bug des Wohnwagens. Obwohl durch diese Maßnahme der Deichselstauraum vom Inneren des Wohnwagens her zugänglich wird, ändert sich an der Grundkonzeption des Wohnwagens nichts, weil der Deichselstauraum nicht insgesamt Stehhöhe aufweist und weil die Eingangstür des Wohnwagens wie bisher in einer Seitenwand hinter der Wohnwagenachse angeordnet war.

Schließlich ist bekannt (DE-A 33 21 306), bei Wohnwagenanhängern mit integriertem Deichselstaukasten die äußeren Ecken zur Verminderung des Luftwiderstands diagonal abzuschneiden. Größere Diagonalflächen entstehen dabei nur im Bereich des niedrigen Deichselstaukastens.

Schließlich ist ein Wohnwagenanhänger der eingangs genannten Art bekannt (GB-A-398 001), bei dem der sich in der Breite verjüngende Bug im wesentlichen die gesamte Höhe des Wohnwagens einnimmt und in einer der Bugseitenwände eine Eingangstür vorgesehen ist. Der Buginnenraum und der Innenraum des restlichen Wohnwagens gehen frei ineinander über.

Bei den Wohnwagenanhängern dieser Art ist der Buginnenraum Teil des Gesamtinnenraums des Wohnwagens und infolge seiner Höhe begehbar. Die Eingangstür ist an eine bisher nicht übliche Stelle gerückt, so daß man den Innenausbau und die Inneneinteilung des Wohnwagens freier und günstiger gestalten kann. Es ergibt sich insgesamt eine Erhöhung der Brauchbarkeit und der vielseitigen Verwendbarkeit des Wohnwagenanhängers. Der sich verjüngende bzw. im wesentlichen konisch zulaufende Bug verhindert schlagartige Druck-/Sog-Wechsel an den Vorderkanten des Wohnwagenanhängers und erbringt eine den Wohnwagenanhänger gegen Pendelbewegungen hinter dem Zugfahrzeug stabilisierende aeorodynamische Wirkung. Der nutzbare Raum ist vergrößert und optimiert, ohne daß die Gesamtlänge des Gespanns aus Wohnwagenanhänger und Zugfahrzeug vergrößert werden müßte, nach der sich Mautgebühren sowie die Kosten beim Transport auf Bahn und Schiff richten. Die Anordnung der Eingangstür erlaubt überdies eine erheblich verbesserte Raumausnutzung sowie zahlreiche Nutzungsvarianten, die bisher nicht gegeben waren.

Der Erfindung liegt die Aufgabe zugrunde, einen noch günstiger nutzbaren Wohnwagenanhänger zu schaffen.

Zur Lösung dieser Aufgabe ist der Wohnwagenanhänger erfindungsgemäß dadurch gekennzeichnet, daß im Buginnenraum ein Vorraum gebildet ist, der durch eine eine offene Durchgangsöffnung freilassende Wand oder durch eine mit einer Tür versehene Wand von dem restlichen Innenraum abgeteilt ist.

Der Vorraum kann als Schmutz- und Feuchtigkeitssperre dienen, in dem Regenbekleidung oder sonstige naß gewordene Bekleidung ausgezogen und abgelegt werden sowie nasse und schmutzige Schuhe abgestellt werden können, bevor der eigentliche Wohnwagen betreten wird. Eine Trennung des Vorraums von dem restlichen Wohnwageninnenraum durch eine Wand mit einer schließbaren Tür, vorzugsweise Schiebetür oder Rolltür, führt zu einer vollständigeren optischen Trennung, so daß bei geschlossener Tür aus dem eigentlichen Wohnwagenraum nicht in den möglicherweise unordentlicheren Vorraum geblickt wird. Außerdem kann der Vorraum als Kältesperre dienen, die bei Benutzung nach dem Schleusenprinzip eine wirksame Temperatursicherung des beheizten Wohnwageninnenraums darstellen kann.

Der sich in der Breite verjüngende Bug erstreckt sich in der Regel über dem Deichselbereich des Wohnwagens, wobei die Bugseitenwände mindestens nahezu in Richtung des Deichselkopfes verlaufen können. In der Regel ist die Eingangstür in der in Fahrtrichtung rechten Bugseitenwand vorgesehen.

Die Trennung zwischen dem Vorraum und dem restlichen Innenraum muß nicht mit dem Beginn der Bugverjüngung zusammenfallen. So kann beispielsweise der Vorraum nur einen Teil des sich verjüngenden Bugs einnehmen oder auch ein Stück nach hinten über den Bug hinausgehen.

Die Eingangstür kann breiter ausgebildet sein als man es bisher wegen der Beeinträchtigungsmöglichkeit für vertretbar gehalten hat. Dadurch ist beispielsweise der Zugang des Vorraums für einen Rollstuhl erleichtert, der überdies auch im Vorraum abgestellt und dort einfach fixiert werden kann.

Vorzugsweise ist ausgehend von dem Buginnenraum im Wohnwagen ein Gang ausgebildet, der im wesentlichen innen an einer Längswand des Wohnwagens mindestens über einen Teil ihrer Länge entlangführt. Diese Gangkonstruktion beläßt neben sich einen sehr breiten Raum für Einbauten, beispielsweise einen Sitzbereich, der nachts in einen Schlafbereich für zwei Personen umbaubar ist. Außerdem kann man größere, sperrige Güter, beispielsweise Surfbretter, Drachenflieger, durch die schräg zur Längsachse gestellte Eingangstür in den Gang einschieben und so in bisher nicht gekannter Weise unterbringen. Es ist bevorzugt, den Gang an derjenigen Seite des Wohnwagens zu haben, wo auch die Eingangstür ist. Der Gang kann, mindestens teilweise, parallel zur Längsmittellinie des Wohnwagens verlaufen.

Vorzugsweise ist an der der Eingangstür gegenüberliegenden Seitenwand des Bugs ein Stauraum vorgesehen. Dieser Stauraum kann halbhoch sein oder die volle Höhe einnehmen, kann von innen und/oder von außen zugänglich sein. Bei halbhoher Ausbildung kann er eine Arbeitsplattform tragen. In diesem Bereich des Bugs kann sich, je nach Einrichtung des übrigen Wohnwagens, auch eine Liege oder dergleichen erstrecken, deren andere Hälfte im Wohnwageninneren liegt. Man kann auch mehrere Liegen in den Vorraum eingreifen lassen oder - speziell wenn der genannte Stauraum besonders niedrig ausgebildet oder weggelassen ist - eine Sitzecke im Vorraum ausbilden, deren einer Teil einfach vor die nach außen öffnende Eingangstür fahrbar ist.

Zur Belichtung des Buginnenraums können in seiner Decke und/oder in seinen Seitenwänden Fenster vorgesehen sein. Der Bug kann insgesamt aus Kunststoff, beispielsweise glasfaserverstärktem Kunststoff, bestehen, so daß man die Fenster einfach durch pigmentfrei-transparente Bereiche ausbilden kann.

Vorzugsweise sind die Bugseitenwände jeweils mit der zugeordneten Wohnwagenseitenwand durchgehend ausgebildet, insbesondere einstückig hergestellt. Mann kann aber auch den gesamten Bug vorgefertigt herstellen und vorn an den restlichen Wohnwagen ansetzen.

Die Erfindung schafft ferner einen Wohnwagen, der dadurch gekennzeichnet ist, daß er einen Boden aufweist, der sich im vom Zugwagen abgekoppelten Aufstellungszustand des Wohnwagens von hinten nach vorn abschüssig verlaufend erstreckt, und daß mindestens bei einem Teil der Begehungsfläche des Wohnwagens ein Zwischenboden vorgesehen ist, der im vom Zugwagen abgekoppelten Aufstellungszustand des Wohnwagens im wesentlichen horizontal verläuft. Auf diese Weise entsteht zwischen dem eigentlichen Wohnwagenboden und dem Zwischenboden ein Raum, den man beispielsweise als Stauraum, für Leitungen, oder für sonstige Einbauten, wie Wassertank oder Heizung, nutzen kann. Wenn man die Einrichtung des Wohnwagens zum Teil oder vollständig auf den Zwischenboden setzt, kann dieser Raum die ganze Wohnwagenbreite und mindestens einen erheblichen Teil der Wohnwagenlänge einnehmen.

Vorzugsweise beginnt der Zwischenboden an einer Stufe, die am Übergang von einem Einganginnenbereich des Wohnwagens zum restlichen Innenbereich des Wohnwagens vorgesehen ist, wobei es sich bei dem Eingangsinnenbereich insbesondere um den Innenraum des vorstehend beschriebenen Bugs bzw. den dort gebildeten Vorraum handelt. Auf diese Weise hat man einen bequemen Zutritt zum eigentlichen Innenbereich des Wohnwagens, weil man zunächst - auch ohne vorgesetzte Trittstufe - den insbesondere auch durch die beschriebene Abschüssigkeit des Bodens relativ tief liegenden Eingangsinnenbereich und dann über eine weitere bequeme Stufe den eigentlichen Innenbereich des Wohnwagens betreten kann. Außerdem ergibt sich eine nochmals verbesserte Tropfwasser- und Schmutztrennung.

Es kann eine Sitzgruppe mit einem gegenüber dem Boden oder dem Zwischenboden des Wohnwagens erhöhten Podest bzw. Auflagerungsboden eingebaut sein. Auf diese Weise erhalten Stauräume unter den Sitzflächen der Sitzgruppe eine wesentlich größere Höhe als bisher, vorzugsweise nochmals gesteigert um die Abstandshöhe Zwischenboden/Wohnwagenboden. Man kann ohne weiteres auf eine Sitzgruppenstauraumhöhe von 70 cm kommen, wobei einer oder beide Stauräume von der Wohnwagenaußenseite zugänglich sein können. Außerdem ist das Hinsetzen auf die Sitzgruppe erleichtert und im Sitzen ein Ausblick auch aus einem relativ hoch angeordneten Fenster möglich.

Der Raum unter dem Zwischenboden kann von außen her, durch den Vertikalbereich der beschriebenen Stufe oder auch vom Innenraum des Wohnwagens her zugänglich sein, insbesondere von einem Sitzgruppenstauraum her.

Die Erfindung schafft ferner einen Wohnwagen, der dadurch gekennzeichnet ist, daß er einen Kanal aufweist, der vom Bereich der Oberseite eines eingebauten Kühlschranks zum Dach des Wohnwagens führt. Es wurde nämlich festgestellt, daß in herkömmlichen Wohnwagen die eingebauten Kühlschränke häufig eine nicht zufriedenstellende Kühlleistung haben, weil die an den Wärmetauschflächen an der Rückseite des Kühlschranks erwärmte Umgebungsluft durch Öffnungen in der Seitenwand des Wohnwagens nur ungenügend abströmen kann.

Der Kanal, an seinem unteren Ende vorzugsweise versehen mit einer sich nach unten verbreiternden Luftsammelhaube, bewirkt jedoch aufgrund einer Art Kamineffekts ein freies, begünstigtes Abströmen der erwärmten Luft nach oben. Es ergibt sich eine wesentlich verbesserte Kühlleistung des Kühlschranks bzw. eine Verringerung des Energiebedarfs bei gleichbleibender Kühlleistung.

In Wohnwagenanhängern werden recht häufig Geräte benutzt, die Abgas erzeugen, insbesondere Heizgeräte oder gasbetriebene Kühlschränke. Die Abgase derartiger Geräte können vorzugsweise besonders günstig durch eine oder mehrere Abgasleitungen über Dach des Wohnwagens abgeführt werden, wobei man die Abgasleitung besonders günstig in oder parallel neben dem beschriebenen Kanal führen kann. Ferner kann man in oder neben dem Kanal eine Abzugsleitung für Kochdünste vorsehen.

In weiterer Perfektionierung kann man am oberen Kanal- bzw. Kanalgruppenabschluß einen elektrischen Saugventilator vorsehen, der vorzugsweise den benötigten Strom aus Solarzellen bezieht.

In bevorzugter Ausgestaltung der Erfindung ist an einer Wohnwagenseite ein von außen zugänglicher Gasflaschenstauraum benachbart dem Radkasten dieser Seite vorgesehen, vorzugsweise dicht hinter diesem Radkasten. Ein derartiger Unterbringungsort ist aus Gründen der Gewichtsausbalancierung relativ zur Wohnwagenachse und aus Gründen der Gewichtskonzentration nahe bei der Wohnwagenachse günstig.

Vorzugsweise weist die tragende Bodengruppe des Wohnwagenanhängers zwei seitlich beabstandete Längsträger auf und ist der Gasflaschenstauraum unter den restlichen Wohnwagenboden nach unten reichend außen seitlich von einem der Längsträger angeordnet. Diese Ausbildung ist ersichtlich konstruktiv besonders günstig.

An der Innenseite des Gasflaschenstauraums kann der Reservereifen des Wohnwagens senkrecht stehend untergebracht sein, wo er unverschmutzt bleibt und leicht zugänglich ist. Der Reservereifen kann an der Innenseite des beschriebenen Längsträgers angeordnet sein und mit seiner Tragmulde ein Stück unter den Wohnwagenboden reichen. Er befindet sich so an einer Stelle, die von der Gewichtsverteilung her günstig ist.

In bevorzugter Ausgestaltung der Erfinung ist im Heck des Wohnwagenanhängers ein von außen zugänglicher Stauraum vorgesehen, der unter eine Heckliegefläche des Wohnwagens reicht. Dort können beispielsweise Gegenstände passender Größe, die während des Urlaubs häufig benötigt aber im Wohnwageninneren nicht praktisch untergebracht werden können, aufgeräumt werden, beispielsweise Bälle, Tennisschläger, Schwimmflossen, Klappstühle oder dergleichen. Man kann eine Durchlademöglichkeit für lange Gegenstände von diesem Heckstauraum zum Wohnwageninneren vorsehen.

Es sei betont, daß die in den Ansprüchen 2 bis 12 beanspruchten Maßnahmen sowohl Weiterbildungsmaßnahmen des Erfindungsgegenstands gemäß Anspruch 1 sind, als auch selbständig erfinderische Maßnahmen, die unter Nichtberücksichtigung der Anspruchsrückbeziehung Bedeutung haben. Dies gilt insbesondere für die Maßnahmen gemäß Anspruch 6 und 7 , die Maßnahme gemäß Anspruch 8 und die Maßnahmen gemäß Anspruch 9 und 10.

Weitere Einzelheiten, Vorteile und Merkmale der Erfindung ergeben sich aus der folgenden Beschreibung der Figuren, auf die bezüglich der erfindungswesentlichen Offenbarung aller im Text nihct näher erläuterten Einzelheiten ausdrücklich verwiesen wird. Es zeigen:

Fig. 1 in Seitenansicht und Draufsicht einen herkömmlichen Wohnwagenanhänger im Vergleich zum erfingungsgemäßen,

Fig. 2 perspektivisch eine Ansicht des erfindungsgemäßen Wohnwagenanhängers,

Fig. 3 perspektivisch ein vorfabriziertes Bugelement,

Fig. 4 in gegenüber Figur 3 kleinerm Maßstab eine andere Ausführungsform des vorfabrizierten konischen Bugelementes,

Fig. 5 in schematischen Drausichten verschiedene Raumprogramme des Wohnwagenanhängers mit konischem Bug,

Fig. 6 eine Seitenansicht eines erfindungsgemäßen Wohnwagenanhängers zur Veranschaulichung weiterer Merkmale,

Fig. 7 eine Draufsicht auf den Wohnwagenanhänger gemäß Figur 6 bei weggeschnittenem Dach, so daß die Innenausstattung erkennbar ist.

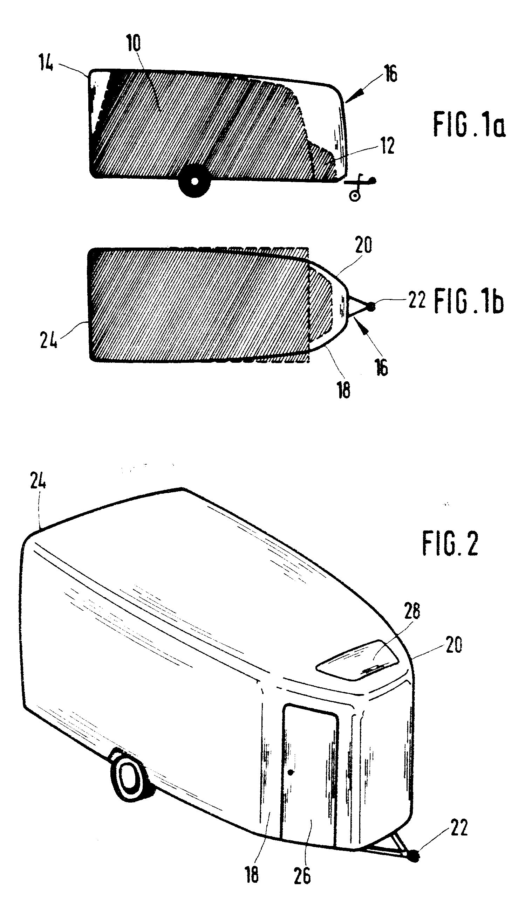

Fig. 1 zeigt schraffiert einen herkömmlichen Wohnwagenanhänger 10 mit Deichselstaukasten 12 im Vergleich zum (in dicken Linien gezeichneten) Wohnwagenanhänger 14 nach der Erfindung. Man erkennt, daß dieser in Fahrtrichtung vorne (in Fig. 1 rechts) einen über die ganze Höhe des Wohnwagens erstreckten konisch zulaufenden Bug 16 aufweist, der durch vertikale Diagonalseitenwände 18, 20 gebildet wird, die etwa in Richtung des Deichselkopfes 22 verlaufen und mit der Längsmittelebene des Wohnwagenanhängers einen Winkel von etwa 45° bilden können. Aus Gründen der Aerodynamik können die vertikalen Diagonalseitenwände 18, 20 auch noch in sich leicht gebogen sein.

Das Heck 24 ist ebenfalls zur Verbesserung der Aerodynamik als Abreißkante ausgebildet. Die Längsseitenwände können leicht gewölbt, die Kanten gebrochen sein. Durch den über die ganze Höhe des Wohnwagens erstreckten konisch zulaufenden Vorbau vermindert sich auch der Abstand zum Zugfahrzeug, was eine weitere Verbesserung der Aerodynamik erbringt.

Fig. 2 läßt die so entstehende Konfiguration des Wohnwagenanhängers deutlich erkennen. Von erheblicher Bedeutung für die Brauchbarkeit des Konzeptes ist, wie die unten folgende Erläuterung noch zeigen wird, weiter die Ausbildung einer Diagonaltür 26 in der rechten Diagonalseitenwand 18. Die hier angeordnete Tür stellt somit keine Behinderung mehr für die Einrichtung des eigentlichen Wohnwagens dar, wo bisher immer ein Zugangsbereich ausgespart werden mußte. Weiter kann aus gleichem Grund die Tür hier erheblich breiter ausgebildet sein, als das bisher akzeptiert werden konnte. Schließlich ergibt die Anbringung einer Tür in Diagonalrichtung auch die Möglichkeit einer Beladung des Wohnwagenanhängers mit Gütern, deren Länge der Gesamtlänge des Wohnwagens gleich ist oder doch nahekommt, wie das bei Surfbrettern, Masten, Drachenfliegern o. dgl. der Fall ist.

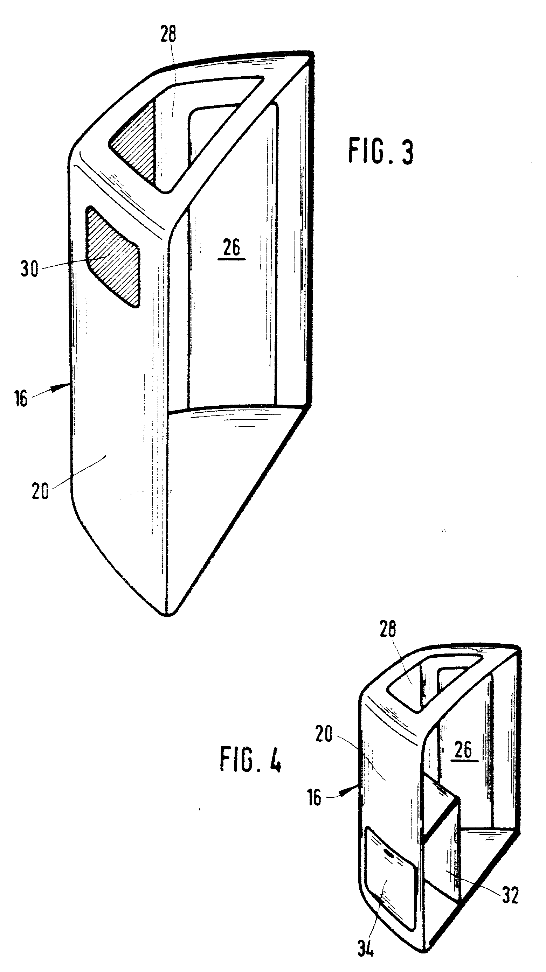

Fig. 3 zeigt den auf die oben erläuterte Weise entstehenden konisch zulaufenden Bug in einer aus glasfaserverstärktem Kunststoff hergestellten Ausführung einschließlich der Diagonaltür 26, sowie einem Oberlicht 28 und einem Seitenfenster 30 in der in Fahrtrichtung gesehen linken Diagonalseitenwand 20. Die Herstellung ist dann besonders einfach und überdies frei von aerodynamischen Störungen, wenn das Oberlicht 28 und das Seitenfenster 30 einfach durch pigmentfreie und damit transparente Bereiche der Wände gebildet werden.

Fig. 4 zeigt eine Ausführungsform, bei der im konisch zulaufenden Bug ein halbhoher Stauraum 32 ausgebildet ist, der sich von der linken Diagonalseitenwand 20 bis etwa zur Vorraummitte erstreckt. Er kann vom Vorrauminneren her zugänglich sein. Im gezeigten Ausführungsbeispiel ist jedoch der halbhohe Stauraum 32 über eine weitere, halbhohe Diagonaltür 34 in der linken Diagonalseitenwand 20 zu beladen. Ggfls. können hier auch die Gasflaschen untergebracht werden.

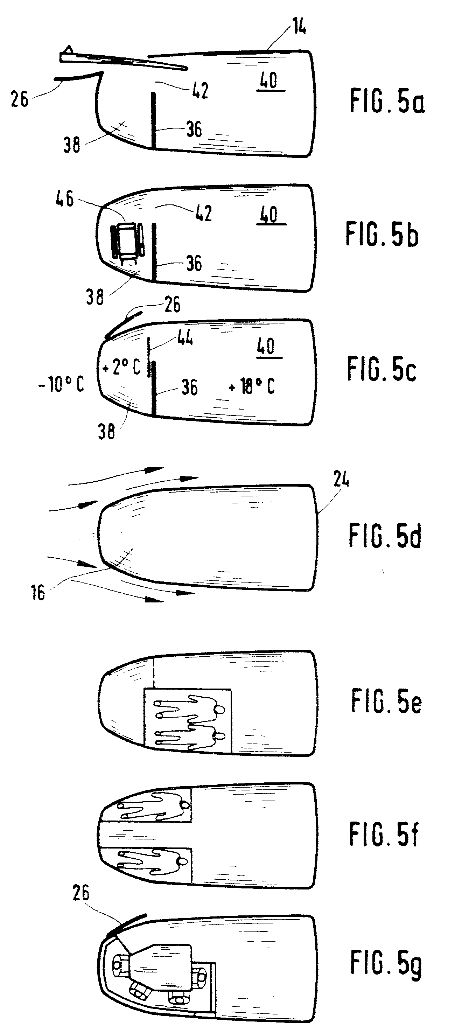

Fig. 5 dient der Erläuterung verschiedener Einzelheiten des erfindungsgemäßen Wohnwagenanhängers 14. Dabei ist in den Fig. 5a bis 5c eine Vertikalwand 36 zu erkennen, die den Vorraum 38 im Inneren des Bugs vom eigentlichen Wohnwageninneren 40 abtrennt. Diese Vertikalwand 36 kann stabil eingebaut oder auch nach Art einer Rolltür entfernbar sein. Speziell beim stabilen Einbau ist zweckmäßig in der Vertikalwand 36 in Fahrtrichtung gesehen rechts der Längsmittelebene des Wohnwagenanhängers eine Durchgangsöffnung 42 vorhanden, die ggfls. Durch eine vertikale Schiebetür 44 verschlossen werden kann. Zweckmäßig wird an der rechten Wand des Wohnwagenanhängers oder etwas innerhalb derselben, jedenfalls aber parallel zur vertikalen Längsmittelebene ein Gang für das Begehen des Wohnwageninneren 40 vorgesehen.

Bei dieser Ausbildung ist es möglich, wie in Fig. 5a angedeutet, auch sperrige und lange Güter durch die Diagonaltür 26 in das Wohnwageninnere 40 einzuladen.

Auch kann wegen der möglichen großen Breite der Diagonaltür 26 beispielsweise ein Rollstuhl 46 in den Vorraum 38 eingeladen und hier für Transportzwecke festgelegt werden.

Der Vorraum 38 kann aufgrund der vorhandenen Diagonaltür und der vorgesehenen Schiebetür 44 auch als Temperaturschleuse dienen, wie in Fig. 5c dargestellt. Wird der Vorraum 38 bei geschlossener Schiebetür 44 durch die Diagonaltür 26 betreten, so kann nur das relativ kleine Volumen des Vorraums 38 abkühlen. Schließt man sodann die Diagonaltür 26 vor dem Öffnen der Schiebetür 44, so sinkt die Temperatur im beheizten Wohnwageninneren 40 nur geringfügig ab.

Die Anströmverhältnisse erbringen aufgrund des konisch zulaufenden Buges 16 eine anliegende Strömung bis zur Abrißkante am Heck 24, wie in Fig. 4d angedeutet.

Selbstverständlich ist es dann, wenn auf eine Vertikalwand 36 verzichtet oder diese entfernbar ausgebildet wird, auch möglich, den Vorraum 38 auch für Wohnzwecke einzusetzen. So können sich in den Vorraum 38 Liegen ganz oder teilweise hinein erstrecken (Fig. 5e, Fig. 5f). Auch ist es möglich, hier eine Sitzecke auszubilden (Fig. 5g), deren vor der Diagonaltür 26 liegendes Teil ggfls. Auf Schienen längs der rechten Seitenwand ins Wohnwageninnere 40 hinein verschieblich ausgebildet ist.

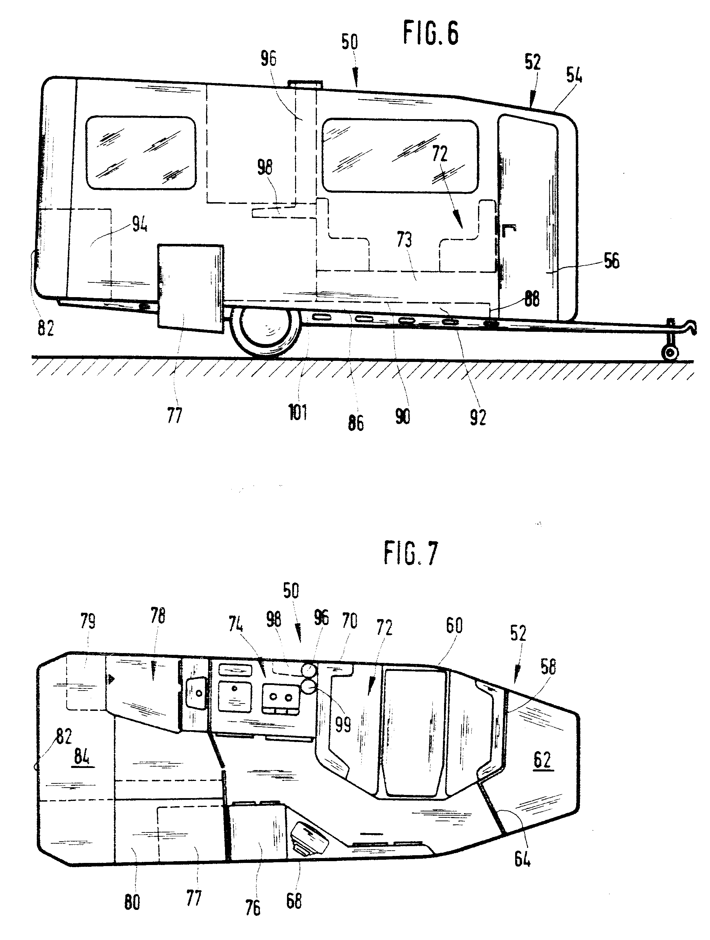

Bei dem in Figuren 6 und 7 gezeichneten Wohnwagenanhänger 50 erkennt man wiederum einen sich hinsichtlich seiner Breite von hinten nach vorn verjüngenden Bug 52, dessen Dach 54 nach vorn leicht abfällt, der aber immer noch insgesamt Stehhöhe hat. Man erkennt ferner die Eingangtür 56 weit vorn in der in FAhrtrichtung rechten Seitenwand des Bugs 52. Die Bugseitenwände sind im wesentlichen eben und vertikal und gehen mit einer Abrundung 60 in die restlichen Wohnwagenseitenwände 68, 70 über, die sich von hinten nach vorn ein wenig in ihrem seitlichen Abstand verjüngen. Die vordere Abschlußwand des Bugs 52 ist im wesentlichen vertikal und knapp halb so breit wie der Wohnwagen 50 an seiner breitesten Stelle hinten.

Figur 7 veranschaulicht, daß durch eine vertikale Trennwand 58, die weiter vorn angeordnet ist als der Übergang 60 von dem sich verjüngenden Bug 52 in den restlichen Wohnwagen 50, im vorderen Bereich des Bugs 52 ein Vorraum 62 gebildet ist. Die Trennwand 58 verläuft ausgehend von der linken Seitenwand des Bugs 52 bis etwas über die Mitte des Wohnwagenanhängers 50 und biegt dann in Richtung nach schräg hinten für ein relativ kurzes Stück ab. Von diesem Ende der Trennwand 58 führt im wesentlichen rechtwinklig zur rechten Seitenwand des Bugs 52 eine Tür 64. Ab dieser Tür führt ein Gang 66 nach hinten, und zwar zunächst im wesentlichen parallel zur rechten Seitenwand 68 des Wohnwagenanhängers 50, dann leicht abbiegend zur Längsmitte des Wohnwagens 50, und dann etwa in der Mitte des Wohnwagens 50 weiter nach hinten. Am Anfangsbereich des Gangs 66 ist anschließend an die linke Seitenwand 70 des Wohnwagens 50 eine Sitzgruppe 72 mit Tisch vorgesehen, wobei die beiden Sitzbänken quer stehen. Die Sitzgruppe 72 ruht auf einem erhöhten Podest 73. Am anschließenden Mittelabschnitt des Gangs 66 ist links ein Koch- und Spülbereich 74 vorgesehen und rechts über dem Radkasten sowie weiter nach innen reichend ein Schrank 76. Weiter nach hinten im Wohnwagen 50, abgeteilt halb durch eine Schiebetür und halb durch eine Klapptür, befindet sich links des Gangs 66 ein Wasch-, Dusch- und Toilettenbereich 78 und rechts in Längsrichtung angeordnet ein Bett 80, das mit seinem hinteren Ende bis zum Heck 82 des Wohnwagens 50 reicht. Außerdem ist hinten quer über die gesamte Breite des Wohnwagens 50 ein weiteres Bett 84 höher als das Bett 80 angeordnet. Im rechten hinteren Heckbereich des Wohnwagens 50 greifen die Betten 80, 84 übereinander. Unter dem vorderen Bereich des Bettes 80 befindet sich ein an den Radkasten anschließender Raum 77, der außen einen von außen zugänglichen Gasflaschenstauraum und innen einen Reserveradraum beinhaltet. Eine Toilette 79 kann unter dem Querbett 84 nach vorn in den Duschbereich zur Benutzung herausgezogen werden.

Figur 6 veranschaulicht, daß der Boden 86 des Wohnwagens 50 im vom Zugwagen abgekoppelten Aufstellungszustand von hinten nach vorn abschüssig verläuft. An der Stelle der Tür 64 zwischen dem Vorraum 62 und dem Gang 66 ist eine Stufe 88 mit einer Höhe von etwa 15 cm vorgesehen, von der aus ein Zwischenboden 90, im gezeichneten Aufstellungszustand im wesentlichen horizontal verlaufend, nach hinten bis zur Stelle der Schiebetür und der Klapptür geht. Zwischen dem Boden 86 und dem Zwischenboden 90 befindet sich ein leicht keilförmiger Raum 92. Dieser Zwischenboden 90 ist im Bereich des Gangs 66 vorgesehen. Man erkennt, daß die Abschüssigkeit des Bodens 86 auch zur Folge hat, daß im Bereich der Eingangstür 56 eine relativ geringe Einstiegshöhe zu überwinden ist. Im Bereich des Vorraums 62 kann der Boden im gezeichneten Aufstellungszustand entweder im wesentlichen horizontal oder auch leicht nach vorn abschüssig sein, was ein Sammeln von Abtropfwasser ganz vorn im Vorraum 62 begünstigen würde. Dort könnte man sogar Ablauföffnungen vorsehen. Der abschüssige Boden 86 begünstigt im Duschbereich 78 das Abfließen des Duschwassers.

Ferner erkennt man einen Heckstauraum 94, der von außen zugänglich ist und in den Bereich unter dem Querbett 84 geht.

Ferner erkennt man einen Warmluft-Abzugskanal 96, der in der vorderen Außenecke des Spül- und Kochbereichs nach oben durch das Dach des Wohnwagens 50 führt. Unten läuft der Kanal 96 in einer sich in Längsrichtung des Wohnwagens 50 verbreiternden Haube 98 aus. Die Haube 98 befindet sich knapp unter der Arbeitsplatte des Spül- und Kochbereichs oberhalb der Wärmeabgabeflächen eines Kühlschranks 100, der unter dieser Arbeitsplatte eingebaut ist. Frische Luft strömt diesen Wärmeabgabeflächen durch eine Bodenöffnung von außen zu. Wenn Abgas von Geräten im Wohnwagen 50 abgeführt werden muß, kann man entweder im Kanal 96 eine oder auch mehrere Abgasleitungen deutlich kleineren Durchmessers unterbringen oder kann neben dem Kanal 96 eine oder mehrere Abgasleitungen nach oben führen. Eine Abzugsleitung 99 für Kochdünste verläuft neben dem Kanal 96 nach oben.

**Patentansprüche**

1. Wohnwagenanhänger (14; 50), dessen in Fahrtrichtung vorderer Endbereich als sich in der Breite nach vorn verjüngender, im wesentlichen die gesamte Höhe des Wohnwagens (14; 50) einnehmender Bug (16; 52) ausgebildet ist, wobei in mindestens einer der Bugseitenwände (18, 20) eine mannshohe Eingangstür (26; 56) vorgesehen ist und der Buginnenraum und der Innenraum des restlichen Wohnwagens miteinander in Verbindung stehen, dadurch gekennzeichnet, daß im Buginnenraum ein Vorraum (38; 62) gebildet ist, der durch eine eine offene Durchgangsöffnung freilassende Wand (36) oder durch eine mit einer Tür (44; 64) versehene Wand (36; 58) von dem restlichen Innenraum abgeteilt ist.

2. Wohnwagenanhänger (14; 50) nach Anspruch 1, dadurch gekennzeichnet, daß ausgehend von dem Buginnenraum im Wohnwagen (14; 50) ein Gang (66) ausgebildet ist, der im wesentlichen innen an einer Längswand (68) des Wohnwagens (14; 50) mindestens über einen Teil ihrer Länge entlangführt.

3. Wohnwagenanhänger (14; 50) nach einem der Ansprüche 1 bis 2, dadurch gekennzeichnet, daß an der der Eingangstür (26; 56) gegenüberliegenden Seitenwand (20) ein Stauraum (32) vorgesehen ist.

4. Wohnwagenanhänger (14; 50) nach einem der Ansprüche 1 bis 3, dadurch gekennzeichnet, daß mindestens die Decke des Bugs (16; 52) ein Fenster (28) aufweist.

5. Wohnwagenanhänger (14; 50) nach einem der Ansprüche 1 bis 4, dadurch gekennzeichnet, daß die Bugseitenwände (18, 20) jeweils mit der zugeordneten Wohnwagenseitenwand (68, 70) durchgehend ausgebildet sind.

6. Wohnwagenanhänger (14; 50) nach einem der Ansprüche 1 bis 5, dadurch gekennzeichnet, daß er einen Boden (86) aufweist, der sich im abgekoppelten Aufstellungszustand des Wohnwagens (14; 50) von hinten nach vorn abschüssig verlaufend erstreckt, und daß mindestens bei einem Teil der Begehungsflächen des Wohnwagens (14; 50) ein Zwischenboden (90) vorgesehen ist, der im abgekoppelten Aufstellungszustand des Wohnwagens (14; 50) im wesentlichen horizontal verläuft.

7. Wohnwagenanhänger (14; 50) nach Anspruch 6, dadurch gekennzeichnet, daß der Zwischenboden (90) an einer Stufe (88) beginnt, die am Übergang von einem Eingangsinnenbereich (38; 62) des Wohnwagens (14; 50) zum restlichen Innenbereich des Wohnwagens (14; 50) vorgesehen ist.

8. Wohnwagenanhänger (14; 50) nach einem der Ansprüche 1 bis 7, dadurch gekennzeichnet, daß eine Sitzgruppe (72) mit einem gegenüber dem Boden (86) oder dem Zwischenboden (90) des Wohnwagens (14; 50) erhöhten Podest (73) eingebaut ist, so daß sich Sitzgruppenstauräume größerer Höhe ergeben.

9. Wohnwagenanhänger (14; 50) nach einem der Ansprüche 1 bis 8, dadurch gekennzeichnet, daß er einen Kanal (96) aufweist, der vom Bereich der Oberseite eines eingebauten Kühlschranks (100) zum Dach des Wohnwagens (14; 50) führt.

10. Wohnwagenanhänger (14; 50) nach Anspruch 9, dadurch gekennzeichnet, daß in oder neben dem Kanal (96) eine Abgasleitung für ein Heizgerät und/oder einen gasbetriebenen Kühlschrank (100) zum Dach des Wohnwagens (14; 50) führt.

11. Wohnwagenanhänger (14; 50) nach einem der Ansprüche 1 bis 10, dadurch gekennzeichnet, daß an einer Wohnwagenseite ein von außen zugänglicher Gasflaschenstauraum (77) benachbart dem Radkasten dieser Seite vorgesehen ist.

12. Wohnwagenanhänger (14; 50) nach Anspruch 11, dadurch gekennzeichnet, daß seine tragende Bodengruppe zwei beabstandete Längsträger (101) aufweist, und daß der Gasflaschenstauraum (77) unter den restlichen Wohnwagenboden (86) nach unten reichend außen seitlich von einem der Längsträger (101) angeordnet ist.

## Claims

1. A trailer caravan (14; 40) whose front end portion, as seen in driving direction, is designed as a nose part (16; 52) tapering forwardly in its width and extending substantially across the entire height of the caravan (14; 50), with a man-high entrance door (26, 56) being provided in at least one of the front end portion sidewalls (18, 20) and the interior of the front end portion as well as the interior of the remaining caravan being connected to each other,
characterized in that an anteroom (38; 62) is formed in the interior of the front end portion, which is separated from the remaining interior room by a wall (36) leaving free an open through-passage or by a wall (36; 58) provided with a door (44; 64).

2. A trailer caravan (14; 50) according to claim 1, characterized in that, starting from the front end portion interior, an aisle (66) is formed in the caravan (14; 50) extending substantially along the inside of a longitudinal wall (68) of the caravan (14; 50) at least across part of the length thereof.

3. A trailer caravan (14; 50) according to any of claims 1 to 2, characterized in that a stowage space (32) is provided at the sidewall (20) opposite the entrance door (26; 56).

4. A trailer caravan (14; 50) according to any of claims 1 to 3, characterized in that at least the ceiling of the front end portion (15; 52) has a window (28).

5. A trailer caravan (14; 50) according to any of claims 1 to 4, characterized in that the front end portion sidewalls (18, 20) are each formed to be continuous with the respectively associated caravan sidewall (68, 70).

6. A trailer caravan (14; 50) according to any of claims 1 to 5, characterized in that it has a floor (86) which, in the decoupled camping condition of the caravan (14; 50), extends in downwardly inclined manner from the rear to the front, and in that at least part of the walking areas of the caravan (14; 50) are formed with an intermediate floor (90) which, in said decoupled camping condition of the caravan (14; 50), extends substantially horizontally.

7. A trailer caravan (14; 50) according to claim 6, characterized in that the intermediate floor (90) starts at a step provided at the transition from an entrance interior portion (38; 62) of the caravan (14; 50) to the remaining interior portion of the caravan (14; 50).

8. A trailer caravan (14; 50) according to any of claims 1 to 7, characterized in that a settee arrangement (72) is provided having a pedestal (73) that is raised with respect to the floor (86) or the intermediate floor (90) of the caravan (14; 50), such that settee arrangement stowage spaces of larger height are formed.

9. A trailer caravan (14; 50) according to any of claims 1 to 8, characterized in that it has a channel (96) leading from the region of the top side of a built-in refrigerator (100) to the roof of the caravan (14; 50).

10. A trailer caravan (14; 50) according to any of claims 1 to 9, characterized in that an exhaust line for a heater and/or a gas-operated refrigerator (100) extends in or beside the channel (96) to the roof of the caravan (14; 50).

11. A trailer caravan (14; 50) according to any of claims 1 to 10, characterized in that an externally accessible gas cylinder stowage space (77) is provided on a caravan side adjacent the wheel house on this side.

12. A trailer caravan (14; 50) according to claim 11, characterized in that its supporting body platform has two spaced apart longitudinal supports (101) , and in that the gas cylinder stowage space (77) is arranged laterally outside from one of the longitudinal supports (101) in such a manner that it reaches downwardly below the remaining caravan floor (86).

**Revendications**

1. Caravane (14;50), dont la zone d'extrémité avant, par rapport au sens du déplacement est réalisée sous forme de proue (16:62) faisant à peu près toute la hauteur de la caravane (14;50), et dont la largeur va en se rétrécissant vers l'avant, une porte d'entrée (26;56) de hauteur d'homme étant prévue dans au moins l'une des parois latérales de proue (18,20) et l'espace intérieur de la proue et l'espace intérieur du reste de la caravane étant reliés entre eux, caractérisée en ce que dans l'espace intérieur de proue est réalisé une antichambre (38;62), délimitée par rapport au reste de l'espace intérieur au moyen d'une paroi (36) laissant subsister une ouverture de passage ouverte ou d'une paroi (36;58) pourvue d'une porte (44;64).

2. Caravane (14:50) selon la revendication 1, caractérisée en ce qu'à partir de l'antichambre de proue est réalisé dans la caravane (14;50) un couloir (66) suivant sensiblement intérieurement une paroi longitudinale (68) de la caravane (14;50), au moins sur une partie de sa longueur.

3. Caravane (14:50) selon l'une des revendications 1 à 2, caractérisée en ce qu'un espace de rangement (32) est prévu contre la paroi latérale (20) opposée à la porte d'entrée (26:56).

4. Caravane (14:50) selon l'une des revendications 1 à 3, caractérisée en ce qu'au moins le plafond de la proue (16:52) présente une fenêtre (28).

5. Caravane (14:50) sel on l'une des revendications 1 à 4, caractérisée en ce que les parois latérales de proue (18,20) sont chacune réalisées continues avec la paroi latérale de caravane (68,70) associée.

6. Caravane (14:50) sel on l'une des revendications 1 à 5, caractérisée en ce qu'elle présente un plancher (86) qui s'étend, lorsque la caravane (14:50) est dételée, avec une pente descendante de l'arrière à l'avant, et qu'au moins pour une partie de la surface de plancher praticable de la caravane (14:50) est prévue un plancher intermédiaire (90) qui s'étend sensiblement horizontalement lorsque la caravane (14:50) est dételée.

7. Caravane (14:50) selon la revendication 6, caractérisée en ce que le plancher intermédiaire (90) commence par une marche (88) prévue à la transition entre une zone intérieure d'entrée (38:62) de la caravane (14:50) et le reste de la zone intérieure de la caravane (14:50).

8. Caravane (14:50) selon l'une des revendications 1 à 7, caractérisée en ce qu'un ensemble de sièges (72) comportant un podium (73) surélevé par rapport au plancher (86) ou au plancher intermédiaire (90) de la caravane (14:50) est intégré, de sorte que soient formés des espaces de rangement de l'ensemble de sièges de plus grande hauteur.

9. Caravane (14:50) selon l'une des revendications 1 à 8, caractérisée en ce qu'elle présente une cheminée (96) qui mène de la zone de la face supérieure d'un réfrigérateur intégré (100) jusqu'au toit de la caravane (14:50).

10. Caravane (14:50) selon la revendication 9, caractérisée en ce qu'une conduite de gaz d'échappement, pour un appareil de chauffage et/ou un réfrigérateur à gaz (100) est disposée dans ou à côté de la cheminée (96) et mène jusqu'au toit de la caravane (14:50).

11. Caravane (14:50) selon l'une des revendications 1 à 10, caractérisée en ce qu'un espace de rangement de bouteilles de gaz (77), accessible de l'extérieur, est prévu d'un côté de la caravane, au voisinage du passage de roue de ce côté.

12. Caravane (14:50) selon la revendication 12, caractérisée en ce que son châssis porteur présente deux longerons (101) espacés et que l'espace de rangement de bouteilles de gaz (77) est disposé au-dessous du reste du plancher de la caravane (86), d'un côté extérieur de l'un des longerons (101).

FIG.1a

FIG.1b

FIG.2

FIG. 3

FIG. 4

EP 0 215 320 B1

FIG.5a

FIG.5b

FIG.5c

FIG.5d

FIG.5e

FIG.5f

FIG.5g

12

## FIG.6

## FIG.7